(19) Europäisches Patentamt
European Patent Office
Office européen des brevets

(11) **EP 3 264 517 B1**

(12) **EUROPEAN PATENT SPECIFICATION**

(45) Date of publication and mention
of the grant of the patent:
**08.12.2021 Bulletin 2021/49**

(21) Application number: **16755254.6**

(22) Date of filing: **12.02.2016**

(51) Int Cl.:
*H01M 10/633* (2014.01)  *H01M 10/48* (2006.01)
*H01M 10/613* (2014.01)  *H01M 10/617* (2014.01)
*H01M 10/627* (2014.01)  *H01M 10/637* (2014.01)
*H01M 10/6563* (2014.01)  *H01M 10/6571* (2014.01)
*H01M 10/658* (2014.01)

(86) International application number:
**PCT/JP2016/054172**

(87) International publication number:
**WO 2016/136507 (01.09.2016 Gazette 2016/35)**

(54) **STORAGE BATTERY CONTROL DEVICE**

VORRICHTUNG ZUR SPEICHERBATTERIEKONTROLLE

DISPOSITIF DE COMMANDE D'ACCUMULATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.02.2015 JP 2015032696**

(43) Date of publication of application:
**03.01.2018 Bulletin 2018/01**

(73) Proprietor: **NGK Insulators, Ltd.
Nagoya-shi, Aichi 467-8530 (JP)**

(72) Inventors:
• **HOSHINO Koji
Nagoya-shi
Aichi 467-8530 (JP)**
• **HATTA Tetsuya
Nagoya-shi
Aichi 467-8530 (JP)**

(74) Representative: **Müller-Boré & Partner
Patentanwälte PartG mbB
Friedenheimer Brücke 21
80639 München (DE)**

(56) References cited:
EP-A1- 2 808 934      JP-A- H0 773 907
JP-A- H0 773 907      JP-A- H09 199 167
JP-A- 2006 139 963    JP-A- 2006 139 963

**Description**

Technical Field

The present invention relates to a system comprising a storage battery control device. For example, the present invention relates to a system comprising a storage battery control device suitably applicable to a storage battery operated at high temperature.

Background Art

In general, frequency adjustment in an electric power system and adjustment of power demand and power supply in the electric power system are carried out using a plurality of power generators, storage batteries, etc., equipped in the electric power system. Further, in most cases, adjustment in difference between the generated electric power from natural energy power generators and its planned output electric power, and reduction in fluctuation of electric power generated by the natural energy power generators are also performed using the power generators, storage batteries, etc. In comparison with general electric power generators, the storage batteries can change the electric power output at high speed, and can be used effectively in frequency adjustment of the electric power system, adjustment of the difference between the generated electric power from natural energy power generators and its planned output electric power, and adjustment of power demand and power supply in the electric power system. Further, when a blackout accident occurs in the electric power system, the storage battery is effectively used instead of the electric power system, as a backup power supply for supplying electric power to power loads.

As this type of storage battery, a storage battery operated at high temperature such as a sodium-sulfur battery (hereinafter referred to as the NaS battery) is used effectively. The NaS battery is a secondary battery having a structure where metal sodium and sulfur as active substances are accommodated in a solid electrolyte tube in an isolated manner. When the NaS battery is heated at high temperature, a certain amount of energy is generated by an electrochemical reaction of both of the melted active substances of these metal sodium and sulfur. Normally, it is known that NaS battery is used in the form of a storage battery formed by assembling a plurality of battery cells upright and mutually connecting the battery cells (see International Publication No. WO 2013/111426).

Further, in the storage battery operated at high temperature such as the NAS battery, as described in International Publication No. WO 2013/111426, excessive increase in temperature inside a casing of the storage battery is not desirable. Therefore, a cooling structure is provided in a lid body of the casing. The cooling structure includes an air intake port, an air chamber, and an air exhaust port.

EP 2 808 934 A1 discloses a power storage apparatus, in which an operation cost and a maintenance cost are not increased, and the temperature of the inside is appropriately maintained, and which is not easily affected by outside air such as salt damage. A battery chamber is formed inside a sealed container. A module battery and a charging/discharging path outside a battery are housed in the battery chamber. In the module battery, an electric cell chamber and an air chamber are formed inside a heat-insulating container. The electric cell chamber and the air chamber are divided by a heat transfer wall. An electric cell of a sodium-sulfur battery, and a charging/discharging path inside a battery are housed in the electric cell chamber. An intake path starts from outside of the sealed container and leads to the air chamber. An exhaust path starts from the air chamber and leads to the sealed container. The blower generates an air flow that sequentially flows through the intake path, the air chamber and the exhaust path. In a case where the cooling of the electric cell chamber is required, the air flow is generated. In a case where the cooling of the electric cell chamber is not required, the air flow is not generated.

JP H09 199167 A discloses a high temperature secondary cell module of high reliability, cooled easily and prevented from easily generating breaking of a wire in a connection part and short-circuiting between positive/negative electrodes even when an active material leaks. A plurality of high temperature sodium secondary cells, vertically separating electrode terminals of positive/ negative electrodes, are vertically piled together and stored in a heat insulating vessel. A connection part between the electrode terminals is enveloped by a powder or fiber state insulating material of dry sand or the like. Cooling of the secondary cell is performed by cooling air taken in from an air intake port by a fan and discharged from a chimney.

JP 20060139963 A discloses a battery cooler capable of maintaining battery temperature within an appropriate temperature range. The battery cooler comprises a high voltage battery mounted on a vehicle; a cooling fan cooling the high voltage battery; a car navigation system setting a driving route of the vehicle and obtaining road information and road traffic information related to the set driving route as well; a temperature sensor detecting the temperature of the high voltage battery; and a BATT ECU estimating the temperature of the high voltage battery when driving through the driving route depending on the battery temperature Tb, the road information, and the road traffic information, and driving the cooling fan when it is estimated that an estimated battery temperature Tbf may exceed a prescribed temperature Tmax.

JP H07 73907 A discloses a temperature control method for a nickel-hydrogen battery capable of efficient charge/discharge. In a method wherein a nickel-hydrogen battery is maintained at 10-40 deg.C to perform charge/discharge, preferably the temperatures T of the battery at the time (t) during charging operation and a temperature rise value DELTAT of the battery after a very little time DELTAt passed from the time (t) are measured.

Summary of Invention

In an operating method regarding cooling described in International Publication No. WO 2013/111426, it is determined whether cooling inside the casing of the storage battery is necessary or not. If it is determined that cooling inside the casing is necessary, an air flow is generated to supply the air to the cooling structure. Specifically, if the temperature measured by a temperature sensor provided in the casing is not less than a reference temperature, it is determined that cooling in the casing is necessary. That is, if the temperature in the casing is not less than a reference temperature A, it is determined that cooling is necessary, and if the temperature is not more than a reference temperature B, it is determined that cooling is not necessary.

In such a case, if the reference temperature A and the reference temperature B are low, the inside of the casing is cooled more than necessary, and electric power for cooling may be consumed wastefully. Further, in a case of the battery operated at high temperature, there has been a problem where, since cooling is performed excessively, electric power consumed by heating means for maintaining the battery temperature is increased undesirably.

If the reference temperature A and the reference temperature B are relatively high, there is a problem that the temperature in the casing reaches the upper limit of the allowable range more frequently.

The present invention is defined by independent claim 1. Preferred embodiments are defined in the dependent claims. In particular, a system comprising a storage battery control device in which it is possible to reduce the frequency of wastefully consuming electric power for cooling and/or electric power consumed by heating means due to excessive cooling of the inside of the storage battery casing, and reduce the frequency that the temperature inside the casing reaches the upper limit of the allowable temperature.

[1] A system with a battery and a storage battery control device according to the present invention controls the storage battery, and the storage battery includes a casing containing a battery assembly made up of a plurality of battery cells, and at least a heat dissipating device configured to maintain the temperature in the casing within a certain temperature range. The storage battery control device includes a heat dissipation control unit configured to control the heat dissipating device. If a predicted temperature of the storage battery at an upcoming time point is higher than a predetermined temperature, the heat dissipation control unit controls the heat dissipating device prior to the time point to increase heat dissipation amount.

In this manner, if a predicted temperature of the storage battery at an upcoming time point is higher than a predetermined temperature, the heat dissipation control unit controls the heat dissipating device to increase heat dissipation amount prior to the time point. Therefore, it is possible to bring the prediction temperature of the storage battery at the time point closer to the predetermined temperature, and avoid excessive cooling of the inside of the storage battery. Consequently, it is possible to reduce the frequency of wastefully consuming electric power for cooling and/or electric power consumed by heating means, and reduce the frequency that the temperature inside the casing reaches the upper limit of the allowable temperature.

[2] In the present invention, the heat dissipation control unit may predict the temperature at the time of finishing electric discharge of the storage battery every unit time, during electric discharge of the storage battery, and if the predicted temperature at the time of finishing electric discharge of the storage battery is higher than a predetermined target temperature at the time of finishing electric discharge of the storage battery, the heat dissipation control unit may drive the heat dissipating device. That is, the time of finishing electric discharge corresponds to the upcoming time point, and the target temperature at the time of finishing electric discharge corresponds to the predetermined temperature.

Therefore, it is possible to prevent the temperature in the casing from exceeding the upper limit of the allowable range (> electric discharge end time target temperature) due to heat generated by reaction during electric discharge. Further, it is possible to avoid excessive cooling of the inside of the casing. As a result, it becomes possible to reduce the heating time of the heater or eliminate the necessity of heating by the heater. Consequently, power consumption at the time of operating the storage battery is reduced, and improvement in the system efficiency is achieved.

[3] In the present invention, the heat dissipation control unit may predict the temperature at the end of electric discharge of the storage battery in a case of continuing electric discharge at electric discharge power of that time, every unit time, during electric discharge of the storage battery, and if the predicted temperature at the end of electric discharge is higher than a predetermined target temperature, the heat dissipation control unit may drive the heat dissipating device.

In a case where the electric discharging power is not constant, and varies over time, the temperature at the end of electric discharge in a case where electric discharge is continued at the average electric discharging power during the unit time should be predicted. In a case where electric discharge is performed by the electric discharge power during electric discharge, and if the temperature at the end of electric discharge which is a time point corresponding to a case where electric discharge has been performed for the longest time is higher than the target temperature at the end of electric discharge, by driving the heat dissipating device, it is possible to reduce the possibility that the battery temperature reaches the upper limit of the allowable temperature. By driving the heat dissipating device only in a case where the temperature at the end of electric discharge is higher than the target temperature at the end of electric discharge, it is possible to prevent excessive cooling of the battery.

[4] In the present invention, the heat dissipation control unit may predict the temperature at the time of starting the next electric discharge every unit time during a time period in which electric discharge of the storage battery is not performed, and if the predicted temperature is higher than a predetermined target temperature, the heat dissipation control unit may drive the heat dissipating device. That is, the time of starting the next electric discharge corresponds to the upcoming time point, and the target temperature corresponds to the predetermined temperature.

If the temperature at the time of starting electric discharge is higher than the target temperature, the temperature inside the casing reaches the upper limit of the allowable temperature more frequently. Therefore, by driving the heat dissipating device in a case where the predicted temperature is higher than the predetermined target temperature, it is possible to bring the temperature at the time of starting electric discharge closer to target temperature, and prevent the temperature in the casing from reaching the upper limit of the allowable temperature easily.

Further, as the electric discharge start time temperature increases with each passing charging/discharging cycle, the electric discharge end time temperature increases accordingly. Consequently, in some cases, the electric discharge end time temperature may exceed the upper limit temperature of the allowable range after several tens or several hundreds of cycles. In such a case, during electric discharge, it may be necessary to drive the heat dissipating device all the time, and consequently, power consumption becomes high. Further, if the heat dissipating device is driven continuously during the time period in which electric discharge of the storage battery is not performed, the inside of the casing may be cooled excessively. Consequently, long-time heating by the heater occurs, and thus, power consumption becomes high.

In contrast, in the present invention, during the time period in which electric discharge of the storage battery is not performed, the next electric discharge start time temperature is predicted every unit time. If the predicted electric discharge start time temperature (electric discharge start time prediction temperature) is higher than the electric discharge start time target temperature, the heat dissipating device is driven. Therefore, it is possible to avoid the situation where the electric discharge start time temperature increases with each passing charging/discharging cycles. Further, it becomes possible to reduce the heating time of the heater or eliminate the necessity of heating by the heater. Consequently, power consumption at the time of operating the storage battery is reduced, and improvement in the system efficiency is achieved.

[5] In the present invention, the storage battery control device may include a schedule generation unit configured to generate a schedule based on a predetermined electric charging/discharging schedule in a manner to increase heat dissipation amount prior to a time point at which the temperature of the storage battery becomes high, due to heat generated by electric charging/discharging of the storage battery, and the heat dissipation control unit may control the heat dissipating device based on the generated schedule.

In this manner, even if the electric charging/discharging schedule is changed, it is possible to reduce the power consumption of the heat dissipating device close to the minimum. Further, while preventing the temperature in the casing from exceeding the upper limit of the allowable range due to heat generated by reaction during electric discharge, it is possible to avoid excessive cooling of the inside of the casing. As a result, it becomes possible to reduce the power consumption at the time of operating the storage battery, and achieve improvement in the system efficiently.

[6] In this case, the schedule generation unit may calculate a battery temperature at each of time points in a case where heat dissipation amount is minimized, based on the electric charging/discharging schedule, if the calculated battery temperature exceeds an upper limit of an allowable range at one or more specific time point among the time points, the schedule generation unit may change heat dissipation amount before the specific time point to have a value more than the minimum heat dissipation amount and not more than the maximum heat dissipation amount, until the battery temperature at the specific time point becomes not more than the upper limit of the allowable range, the schedule generation unit may set heat dissipation amount at the specific time point after the changing, as a lower limit value of the heat dissipation amount, the schedule generation unit may generate a heat dissipation schedule where the set heat dissipation amount before the specific time point is not less than the lower limit value of the heat dissipation amount, and the heat dissipation control unit may control the heat dissipating device based on the generated heat dissipation schedule.

[7] Alternatively, the storage battery control device may include a temperature sensor configured to measure a battery temperature in the casing, and the schedule generation unit may calculate a battery temperature at each of time points in a case where heat dissipation amount is minimized, based on the electric charging/discharging schedule, if the calculated battery temperature exceeds an upper limit of an allowable range at one or more specific time point among the time points, the schedule generation unit may change heat dissipation amount before the specific time point to have a value more than the minimum heat dissipation amount and not more than the maximum heat dissipation amount, until the battery temperature at the specific time point becomes not more than the upper limit of the allowable range, the schedule generation unit may re-calculate the battery temperature of each of the time points based on the changed heat dissipation amount, the schedule generation unit may generate a battery temperature schedule where a target battery temperature for each of the time points is not more than the re-calculated battery temperature, and the heat dissipation control unit may control the heat dissipating device in a manner that the battery temperature at each of the time points from the temperature sensor becomes closer to the target battery temperature corresponding to each of the time points of the generated battery temperature schedule.

[8] In the case of [6] or [7], the storage battery may be a storage battery where amount of heat generated at the time of electric discharging is larger than amount of heat generated at the time of electric charging, and the heat dissipation control unit may control the heat dissipating device based on the electric charging/discharging schedule in a manner that the battery temperature at the time of starting electric discharging becomes not less than the lower limit of the allowable range, and closer to the lower limit of the allowable range.

In this manner, by bringing the battery temperature at the time of starting electric discharge closer to the lower limit of the allowable range, in comparison with the case where the battery temperature becomes the lower limit of the allowable range before starting electric discharge, it is possible to reduce the electric power required for cooling before starting electric discharge and the electric power for maintaining the battery temperature. Further, since the battery temperature at the time of starting electric discharge is the lower limit of the allowable range, it is possible to reduce the possibility that the battery temperature reaches the upper limit of the allowable range.

In the storage battery control device according to the present invention, it becomes possible to reduce the frequency of wastefully consuming electric power for cooling and/or electric power consumed by heating means accompanied by excessively cooling the inside of the storage battery, and also reduce the frequency that the temperature inside the casing reaches the upper limit of the allowable range.

Brief Description of Drawings

FIG. 1 is a block diagram showing a structure of a system with a storage battery and a storage battery control device according to the present invention;
FIG. 2 is a vertical cross sectional view showing a structure of the storage battery with partial omission;
FIG. 3 is a circuit diagram showing a battery assembly placed in a box body with partial omission;
FIG. 4 is a block diagram showing a structure of a storage battery control device (first control device) according to a first embodiment;
FIG. 5 is a flow chart showing processing operation of a first control device;
FIG. 6 is a time chart showing processing operation of the first control device;
FIG. 7 is a block diaphragm showing a structure of a storage battery control device (second control device) according to a second embodiment;
FIG. 8 is a flow chart showing processing operation of the second control device;
FIG. 9 is a time chart showing processing operation of the second control device;
FIG. 10 is a block diaphragm showing a structure of a storage battery control device (third control device) according to a third embodiment;
FIG. 11 is a block diaphragm showing a structure of a storage battery control device (fourth control device) according to a fourth embodiment;
FIG. 12 is a flow chart showing processing operation of the fourth control device;
FIG. 13 is a time chart showing processing operation of the fourth control device;
FIG. 14 is a block diaphragm showing a structure of a storage battery control device (fifth control device) according to a fifth embodiment;
FIG. 15 is a flow chart showing processing operation of the fifth control device; and
FIG. 16 is a time chart showing processing operation of the fifth control device.

Description of Embodiments

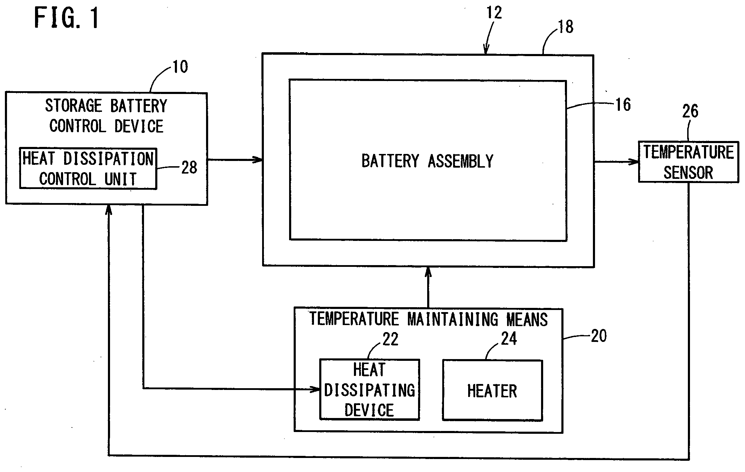

Hereinafter, embodiments of a storage battery according to the present invention will be described with reference to FIGS. 1 to 16.

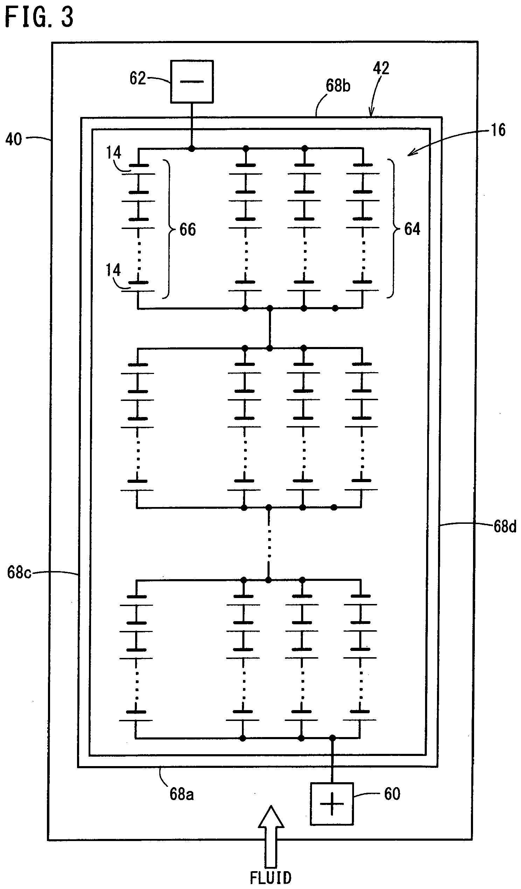

A storage battery 12 controlled by a storage battery control device 10 according to an embodiment of the present invention includes a casing 18 containing a battery assembly 16 made up of a plurality of battery cells 14 (see FIG. 3), and temperature maintaining means 20 for maintaining the temperature in the casing 18 within a certain allowable range (operating temperature range). As the temperature maintaining means 20, a heat dissipating device 22 and a heater 24 are provided. If the casing 18 has high heat insulating performance, the heater 24 may be omitted. Further, a temperature sensor 26 for measuring the current temperature in the casing 18 is provided.

Moreover, the storage battery control device 10 includes a heat dissipation control unit 28 for controlling the heat dissipating device 22 to increase the heat dissipation amount prior to a time point at which the temperature of the storage battery 12 becomes high, utilizing the heat generated as a result of electric charging/discharging of the storage battery 12.

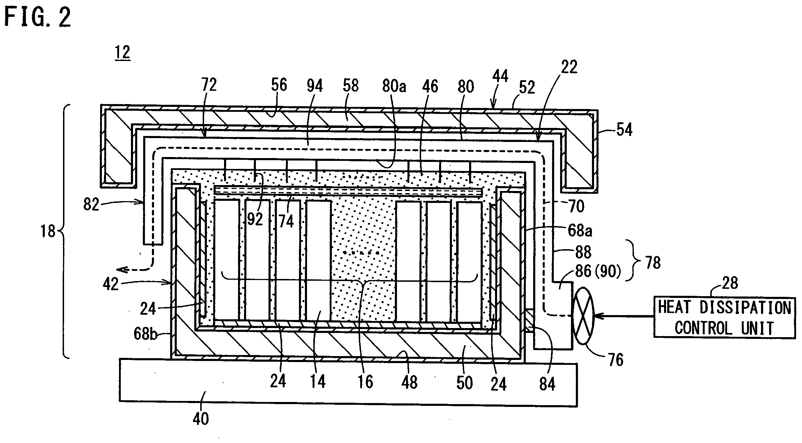

Next, one specific example of the storage battery 12 provided with the heat dissipating device 22 will be described with reference to FIGS. 2 and 3.

As shown in FIG. 2, the storage battery 12 includes a base frame 40, e.g., made of steel material, a box body 42 fixedly placed on the base frame 40, a battery assembly 16 made up of a large number of battery cells 14 accommodated in the box body 42, and a lid body 44 closing an opening of the box body 42. For example, the battery cells 14 have a cylindrical shape, and are accommodated in the box body 42 such that the axial directions of the battery cells 14 are oriented in the vertical direction. The box body 42 and the lid body 44 make up the casing 18 of the storage battery 12.

Further, heaters 24 used for raising the temperature in the box body 42 are provided along a bottom surface and inner wall surfaces of the box body 42, respectively. Further, in order to transmit heat of the heaters 24 to the battery cells 14, and absorb heat generated in the battery cells 14, a gap between the box body 42 and the battery assembly 16 is filled with silica sand 46.

For example, the box body 42 has a substantially rectangular parallelepiped shape, and includes four side walls and a bottom wall. A top face of the box body 42 is opened. For example, the box body 42 is made of plate material of stainless steel. The box body 42 itself has a box shape containing therein a hollow portion 48. The hollow portion 48 is a hermetical space which is sealed in an air-tight manner. The hollow portion 48 is allowed to communicate with the external space by a vacuum valve (not shown). A porous vacuum heat insulating board 50 formed by solidifying glass fiber into a plate shape using an adhesive is loaded in the hollow portion 48 to achieve a vacuum heat insulating structure of the box body 42.

The lid body 44 includes a ceiling wall 52 and an eaves 54, and the lid body 44 is provided to close the top-face opening of the box body 42. In the same manner as in the case of the box body 42, the lid body 44 is made of plate material of stainless steel. The lid body 44 itself has a box shape containing therein a hollow portion 56. The hollow portion 56 is a hermetical space which is sealed in an air-tight manner. The hollow portion 56 is allowed to communicate with the external space by a vacuum valve (not shown). A porous vacuum heat insulating board 58 formed by solidifying glass fiber into a plate shape using an adhesive is loaded in the hollow portion 56 to achieve a vacuum heat insulating structure of the lid body 44.

As shown in FIG. 3, the battery assembly 16 is formed by connecting two or more blocks 64 in series from a positive electrode external terminal 60 to a negative electrode external terminal 62. Each of the blocks 64 is formed by connecting two or more circuits (strings 66) in parallel, and each of the strings 66 is formed by connecting two or more battery cells 14 in series. The positive electrode external terminal 60 extends to the outside through a first side wall 68a of the box body 42, and the negative electrode external terminal 62 extends to the outside through a second side wall 68b of the box body 42 (side wall opposite to the first side wall 68a).

Further, as shown in FIG. 2, the heat dissipating device 22 includes a metal duct 72, a plate member 74, and a fan 76. The metal duct 72 is provided between at least the box body 42 and the lid body 44, and fluid 70 flows inside the duct 72. The plate member 74 is provided between the battery assembly 16 and the duct 72, and at least has electrically insulating property. The fan 76 is provided outside the box body 42, and sends the fluid 70 to the duct 72. In the embodiment of the present invention, as the fluid 70 flowing through the duct 72, gases such as air, a nitrogen gas, a helium gas, etc. may be used.

The duct 72 includes a metal fluid inlet section 78, a metal heat transportation section 80, and a metal heat releasing section 82. The fluid 70 is introduced into the fluid inlet section 78. The metal heat transportation section 80 is provided downstream of the fluid inlet section 78, between the lid body 44 and the box body 42, and transports heat generated at least in the box body 42 together with the fluid 70. The heat releasing section 82 is provided downstream of the heat transportation section 80, and releases the heat to the outside together with the fluid 70.

The fluid inlet section 78 is provided along the first side wall 68a of the box body 42, and extends toward between the eaves 54 of the lid body 44 and the first side wall 68a of the box body 42. In particular, a buffer material 84 (a heat insulating material) is interposed between the fluid inlet section 78 and the first side wall 68a of the box body 42, and the fluid inlet section 78 is spaced from the first side wall 68a of the box body 42. Preferably, the buffer material 84 has a heat insulating function. In the embodiment, a heat insulating material is used as the buffer material 84.

This fluid inlet section 78 includes a fluid supply section 86 and a fluid guide section 88 communicating with the fluid supply section 86. The fluid 70 from the fan 76 provided outside is supplied into the fluid supply section 86. The fluid 70 supplied to the fluid supply section 86 is guided to the heat transportation section 80 along the fluid guide section 88. The fluid supply section 86 includes an air chamber 90. The air chamber 90 has a channel which is gradually increased in diameter toward the fluid guide section 88.

The heat transportation section 80 is provided between the ceiling wall 52 of the lid body 44 and the box body 42. The shape of a lower surface 80a of the heat transportation section 80 is a rectangular shape which is the same as the shape of the opening of the box body 42. The size of the lower surface 80a is substantially the same as the size of the opening of the box body 42. Further, the lower surface 80a of the heat transportation section 80 (i.e., a surface facing the battery assembly 16 (or the plate member 74)) is provided with a plurality of fins 92 which extend toward the battery assembly 16 (or the plate member 74).

A plurality of support members (not shown) for maintaining the shape of the channel 94 are provided inside the channel 94 of the heat transportation section 80. Examples of the support members include plain plate supports, corrugated supports (wavy supports), flake-shaped supports, etc.

The heat releasing section 82 is provided so as to extend from between the second side wall 68b of the box body 42 and the eaves 54 of the lid body 44 along the second side wall 68b of the box body 42. In particular, the heat releasing section 82 is provided in contact with the second side wall 68b of the box body 42.

As described later, the heat dissipation control unit 28 of the storage battery control device 10 drives the fan 76, whereby the fluid 70 is cooled. The cooled fluid 70 is supplied to the duct 72. As a result of supply of the fluid 70 into the duct 72, the heat in the box body 42 is transferred to the fluid 70 in the heat transportation section 80. Therefore, the fluid 70 becomes hot. The hot fluid 70 is released to the outside of the box body 42 through the heat releasing section 82. That is, the heat in the casing 18 is dissipated to the outside. Therefore, the inside of the casing 18 is cooled forcibly. Even if both of the box body 42 and the lid body 44 have high heat insulating performance, the inside of the casing 18 is cooled efficiently. Consequently, even if the electric discharge output is high, or electric discharge time period is long, the temperature in the casing 18 can be maintained within an allowable range, and it becomes possible to operate the battery assembly 16 in the box body 42 under the optimum operating environment.

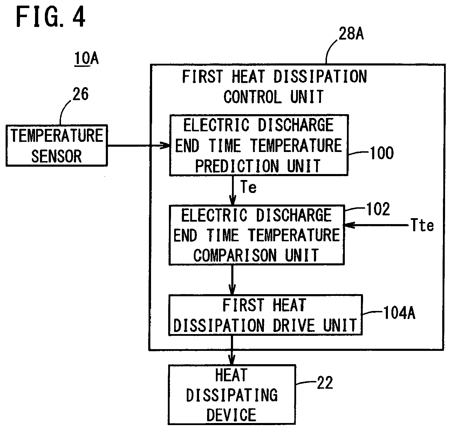

Next, several specific examples of the storage battery control device 10 will be described with reference to FIGS. 4 to 16.

As shown in FIG. 4, a storage battery control device according to a first specific example (hereinafter referred to as the first control device 10A) has a first heat dissipation control unit 28A. The first heat dissipation control unit 28A includes an electric discharge end time temperature prediction unit 100, an electric discharge end time temperature comparison unit 102, and a first heat dissipation drive unit 104A. During electric discharging of the storage battery 12, every unit time, the electric discharge end time temperature prediction unit 100 predicts the temperature at the time of finishing electric discharge. The electric discharge end time temperature comparison unit 102 compares the predicted temperature at the time of finishing electric discharge (electric discharge end time prediction temperature Te) with a predetermined target temperature Tte at the time of finishing electric discharge. The first heat dissipation drive unit 104A drives or stops the heat dissipating device 22 based on a comparison result from the electric discharge end time temperature comparison unit 102.

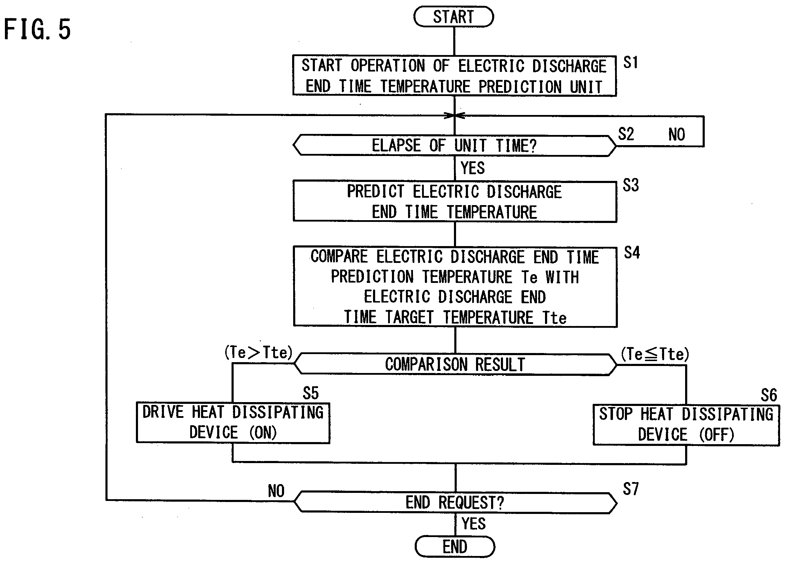

Processing operation of the first control device 10A will be described with reference to a flow chart in FIG. 5.

Firstly, in step S1, the first heat dissipation control unit 28A starts operation of the electric discharge end time temperature prediction unit 100 at the time point of starting electric discharge.

In step S2, the electric discharge end time temperature prediction unit 100 waits for the elapse of the unit time. After the elapse of the unit time, the routine proceeds to the next step S3, and the electric discharge end time temperature prediction unit 100 predicts a temperature at the time of finishing electric discharge (electric discharge end time temperature). This prediction is performed based on change in temperature between the current temperature and the temperature at the time of finishing electric discharge.

The current temperature is obtained from the temperature sensor 26. The change in temperature until the time of finishing electric discharge is obtained by dividing the heat balance between the amount of generated heat and the amount of dissipated heat until the time of finishing electric discharge, by the heat capacity of the battery assembly 16.

The amount of generated heat is obtained by summing a heat value (power conversion value) of the heat generated by energization of the heaters 24 and a heat value (power conversion value) of the heat generated by reaction in the battery assembly 16, and then multiplying the resulting value by the remaining time until the time of finishing electric discharge. If the heaters 24 are not provided, the amount of generated heat is calculated only by the heat generated by reaction in the battery assembly 16. The amount of dissipated heat (heat dissipation amount) is obtained by multiplying a heat value (power conversion value) of the heat dissipated from the heat dissipating device 22 by the remaining time until the time of finishing electric discharge. If the heat dissipating device 22 is not operated, the heat dissipation amount has the minimum value.

In step S4, the electric discharge end time temperature comparison unit 102 compares the predicted temperature at the time of finishing electric discharge (electric discharge end time prediction temperature Te) with a predetermined target temperature Tte at the time of finishing electric discharge.

If the comparison result is Te > Tte, the routine proceeds to step S5, and the first heat dissipation drive unit 104A drives (turns on) the heat dissipating device 22 (ON). If the comparison result is Te ≤ Tte, the routine proceeds to step S6, and the first heat dissipation drive unit 104A stops (turns off) the heat dissipating device 22 (OFF).

Then, in step S7, the first heat dissipation control unit 28A determines whether or not there is a request for stopping operation of the first control device 10A (e.g., end request due to interruption of the power supply, maintenance operation, etc.). If there is no request for stopping operation, the routine returns to step S2 to repeat the processes of step S2 and the subsequent steps.

In the above step S7, if there is a request for stopping operation, the process of the first control device 10A is finished. Thereafter, when electric discharge is started again, the above described processing operation by the first control device 10A is repeated.

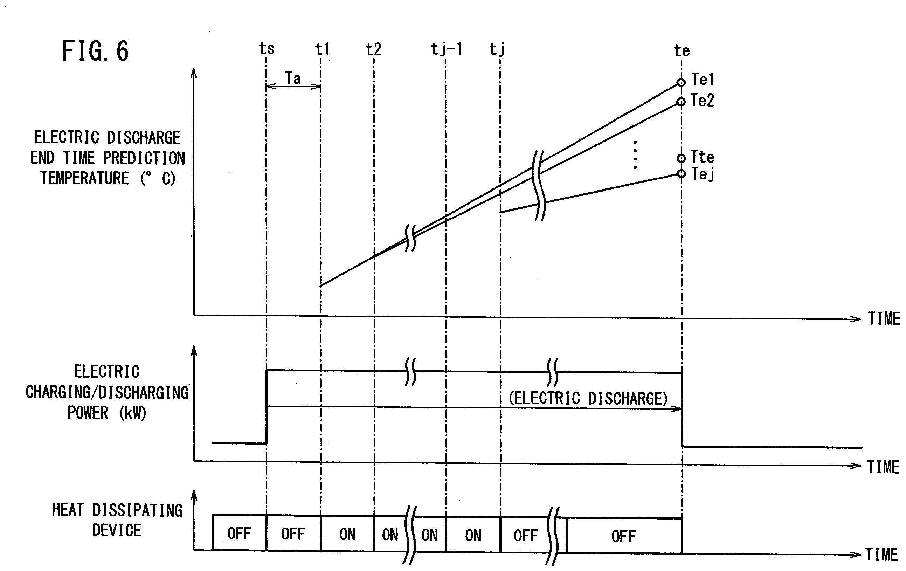

Next, an example of the processing operation by the first control device 10A will be described with reference to a time chart in FIG. 6.

For example, at the time point t1 of FIG. 6, i.e., at the time point t1 after the elapse of the unit time Ta from the electric discharge start time point ts, if the electric discharge end time prediction temperature Te1 predicted by the electric discharge end time temperature prediction unit 100 is higher than the electric discharge end time target temperature Tte, the first heat dissipation drive unit 104A drives (turns on) the heat dissipating device 22 (denoted by "ON" in FIG. 6). Likewise, at the time point t2 after elapse of the unit time Ta from the time point t1, if the electric discharge end time prediction temperature Te2 is higher than the electric discharge end time target temperature Tte, the first heat dissipation drive unit 104A continuously drives the heat dissipating device 22. Thereafter, at the time point tj after the elapse of the unit time Ta from the time point tj-1, when the electric discharge end time prediction temperature Tej becomes equal to or less than the electric discharge end time target temperature Tte, the first heat dissipation drive unit 104A stops operation of the heat dissipating device 22 (denoted by "OFF" in FIG. 6). Thereafter, every unit time Ta, if the electric discharge end time predication temperature Te is equal to or less than the electric discharge end time target temperature Tte, the first heat dissipation drive unit 104A continues to stop operation of the heat dissipating device 22. During the time period from the time point tj to the electric discharge end time point te, if the electric discharge end time prediction temperature Te becomes higher than the electric discharge end time target temperature Tte again, it is a matter of course that the first heat dissipation drive unit 104A drives the heat dissipating device 22 as in the case of the above described time point t1 and time point t2.

In this first control device 10A, during electric discharge of the storage battery 12, the electric discharge end time temperature is predicted every unit time Ta. If the predicted electric discharge end time temperature (electric discharge end time prediction temperature Te) is higher than the electric discharge end time target temperature Tte, the heat dissipating device 22 is driven. Therefore, it is possible to prevent the temperature in the casing 18 from exceeding the upper limit of the allowable range (> electric discharge end time target temperature Tte) due to heat generated by reaction during electric discharge. Further, it is possible to avoid excessive cooling of the inside of the casing 18. As a result, it becomes possible to decrease the heating time of the heaters 24 or reduce the heating time to zero. Consequently, power consumption at the time of operating the storage battery 12 is reduced, and improvement in the system efficiency is achieved.

In the event of a blackout accident in the power system, during the blackout, it is not possible to know when the problem of the blackout accident will be solved and the power system will be restored. Therefore, in a case where the storage battery is used as a backup power source, during electric discharge, it is not possible to know when the electric discharge will be finished. In a case where it is not possible to predict the electric discharge end time temperature since it is not possible to know when the electric discharge will be finished, in the above described first control device 10A, the first heat dissipation control unit 28A may predict a temperature at the end of electric discharge in a case of continuing electric discharge at the electric discharge power of that time, during electric discharge of the storage battery 12, every unit time, and if the predicted temperature at the end of electric discharge is higher than a predetermined target temperature at the end of electric discharge, the first heat dissipation control unit 28A may drive the heat dissipating device 22. The end of electric discharge herein means a state where there is no remaining capacity in the storage battery. In a case where the time of finishing electric discharge is not known beforehand, by predicting the temperature at the end of electric discharge, it is possible to reduce the possibility that the temperature of the battery reaches the upper limit of the allowable temperature range.

In a case where the electric discharging power is not constant, and varies over time, the temperature at the end of electric discharge in a case where electric discharging is continued at the average electric discharging power during the unit time should be predicted. In a case where electric discharge is performed by the electric discharge power during electric discharge, and if the temperature at the end of electric discharge which is a time point corresponding to a case where electric discharge has been performed for the longest time is higher than the target temperature at the end of electric discharge, by driving the heat dissipating device 22, it is possible to reduce the possibility that the battery temperature reaches the upper limit of the allowable temperature range. By driving the heat dissipating device 22 only in a case where the temperature at the end of electric discharge is higher than the target temperature at the end of electric discharge, it is possible to prevent excessive cooling of the battery.

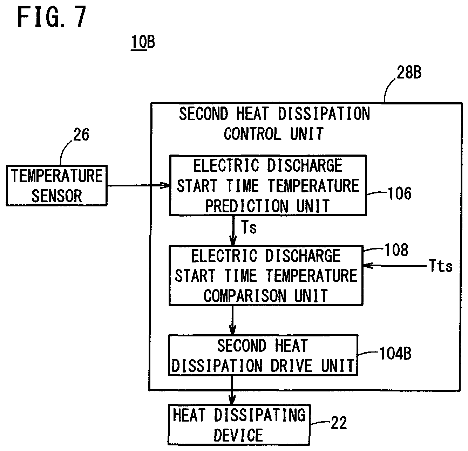

Next, a storage battery control device according to a second embodiment (hereinafter referred to as the second control device 10B) will be described with reference to FIGS. 7 to 9.

As shown in FIG. 7, the second control device 10B includes a second heat dissipation control unit 28B. The second heat dissipation control unit 28B includes an electric discharge start time temperature prediction unit 106, an electric discharge start time temperature comparison unit 108, and a second heat dissipation drive unit 104B. The electric discharge start time temperature prediction unit 106 predicts the temperature at the time of starting the next electric discharge every unit time Ta, during the time period in which electric discharge of the storage battery 12 is not performed. The electric discharge start time temperature comparison unit 108 compares the predicted temperature (electric discharge start time prediction temperature Ts) with a predetermined electric discharge start time target temperature Tts. The second heat dissipation drive unit 104B drives or stops the heat dissipating device 22 based on the comparison result from the electric discharge start time temperature comparison unit 108.

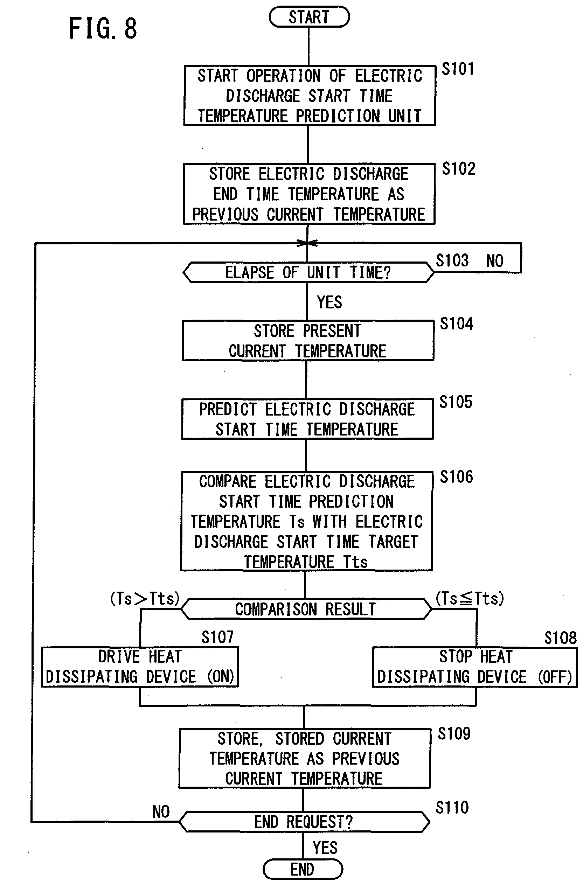

Processing operation of the second control device 10B will be described with reference to a flow chart in FIG. 8.

Firstly, in step S101, the second heat dissipation control unit 28B starts operation of the electric discharge start time temperature prediction unit 106 at the time point at which electric discharge is finished.

In step S102, the electric discharge start time temperature prediction unit 106 obtains the current temperature when the electric discharge is finished (electric discharge end time temperature) from the temperature sensor 26, and stores the obtained temperature as the previous current temperature.

In step S103, the electric discharge start time temperature prediction unit 106 waits for the elapse of the unit time. After the elapse of the unit time, the routine proceeds to the next step S104 for obtaining the current temperature, and storing the obtained temperature as the present current temperature.

In step S105, the electric discharge start time temperature prediction unit 106 predicts a temperature at the time of starting the next electric discharge, and uses the predicted temperature as the electric discharge start time prediction temperature. This prediction can be made, e.g., based on the following computing equation:

$$\text{Electric Discharge Start Time Prediction Temperature}$$
$$= \text{Present Current Temperature} + \text{Temperature Drop}$$
$$\text{Inclination} \times \text{the Remaining Time until the Start of the Next}$$
$$\text{Electric Discharging}.$$

The temperature drop inclination can be obtained by calculating:

$$\{(\text{Present Current Temperature} - \text{Previous Current}$$
$$\text{Temperature})/\text{Unit Time}\}\}.$$

The above computation is merely an example. It is a matter of course that other computing equations may be used.

In step S106, the electric discharge start time temperature comparison unit 108 compares the electric discharge start time prediction temperature Ts with a predetermined electric discharge start time target temperature Tts.

If the comparison result is Ts > Tts, the routine proceeds to step S107, and the second heat dissipation drive unit 104B drives the heat dissipating device 22. If the comparison result is Ts ≤ Tts, the routine proceeds to step S108, and the second heat dissipation drive unit 104B stops the heat dissipating device 22.

In step S109, the electric discharge start time temperature prediction unit 106 updates the current temperature by storing the present current temperature as the previously stored current temperature.

In step S110, the second heat dissipation control unit 28B determines whether or not there is a request for stopping operation of the second control device 10B (e.g., end request due to interruption of the power supply, maintenance operation, etc.). If there is no request for stopping operation, the routine returns to step S103 to repeat the processes of step S103 and the subsequent steps.

In the above step S110, if there is a request for stopping operation, the process of the second control device 10B is finished. Thereafter, when electric discharge is started again, and the electric discharge is finished, the above described processing operation by the second control device 10B is repeated.

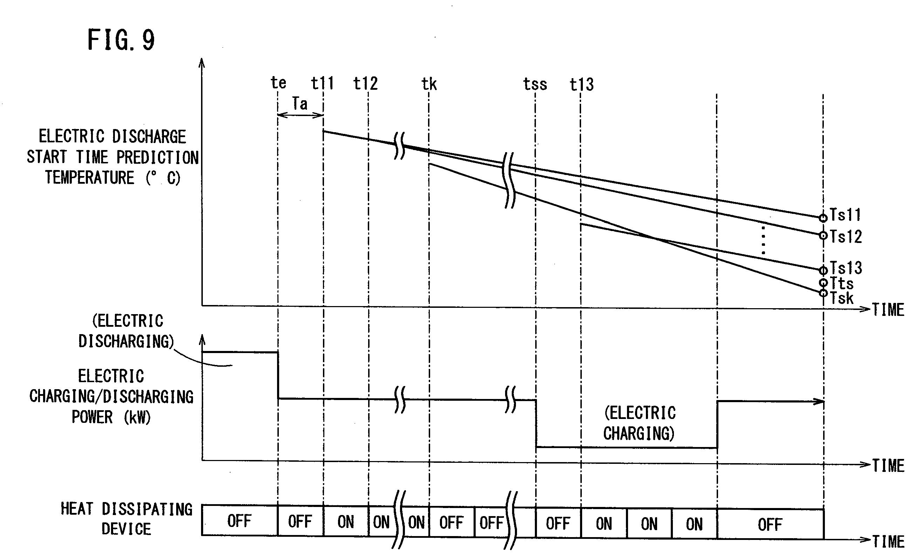

Next, an example of the processing operation by the second control device 10B will be described with reference to a time chart in FIG. 9.

For example, at the time point t11 of FIG. 9, i.e., at the time point t11 after the elapse of the unit time Ta from a time point te at which the electric discharge is finished, if the electric discharge start time prediction temperature Ts11 predicted by the electric discharge start time temperature prediction unit 106 is higher than the electric discharge start time target temperature Tts, the second heat dissipation drive unit 104B drives the heat dissipating device 22 (denoted by "ON" in FIG. 9). Likewise, at the time point t12 after elapse of the unit time Ta from the time point t11, if the electric discharge start time prediction temperature Ts12 is higher than the electric discharge start time target temperature Tts, the second heat dissipation drive unit 104B continuously drives the heat dissipating device 22. Thereafter, at the time point tk, if the electric discharge start time prediction temperature Tsk becomes equal to or less than the electric discharge start time target temperature Tts, the second heat dissipation drive unit 104B stops operation of the heat dissipating device 22 (denoted by "OFF" in FIG. 9). Thereafter, every unit time Ta, if the electric discharge start time prediction temperature Ts is equal to or less than the electric discharge start time target temperature Tts, the second heat dissipation drive unit 104B continues to stop operation of the heat dissipating device 22.

Thereafter, for example, at the time point t13 after the elapse of the unit time Ta from the electric charging start time point tss, if the electric discharge start time prediction temperature Ts13 is higher than the electric discharge start time target temperature Tts, the second heat dissipation drive unit 104B drives the heat dissipating device 22 again.

In this manner, every unit time Ta, if the electric discharge start time prediction temperature Ts is higher than the electric discharge start time target temperature Tts, the second heat dissipation drive unit 104B drives the heat dissipating device 22, and if the electric discharge start time prediction temperature Ts is equal to or less than the electric discharge start time target temperature Tts, the second heat dissipation drive unit 104B stops the heat dissipating device 22.

Normally, as the electric discharge start time temperature increases with each passing charging/discharging cycle, the electric discharge end time temperature increases accordingly. Consequently, in some cases, the electric discharge end time temperature may exceed the upper limit temperature of the allowable range after several tens or several hundreds of cycles. In this case, during electric discharge, it may be necessary to drive the heat dissipating device 22 all the time, and consequently, power consumption becomes high. Further, if the heat dissipating device 22 is driven continuously during the time period in which electric discharge of the storage battery 12 is not performed, the inside of the casing 18 may be cooled excessively. Consequently, long-time heating by the heaters 24 occurs, and thus, power consumption becomes high.

In contrast, in the second control device 10B, during the time period in which electric discharge of the storage battery 12 is not performed, the next electric discharge start time temperature is predicted every unit time Ta. If the predicted electric discharge start time temperature (electric discharge start time prediction temperature Ts) is higher than the electric discharge start time target temperature Tts, the heat dissipating device 22 is driven. Therefore, it is possible to avoid the situation where the electric discharge start time temperature increases with each passing charging/discharging cycle. Further, it becomes possible to reduce the heating time of the heaters 24 or eliminate the necessity of heating by the heaters 24. Consequently, power consumption at the time of operating the storage battery 12 is reduced, and improvement in the system efficiency is achieved.

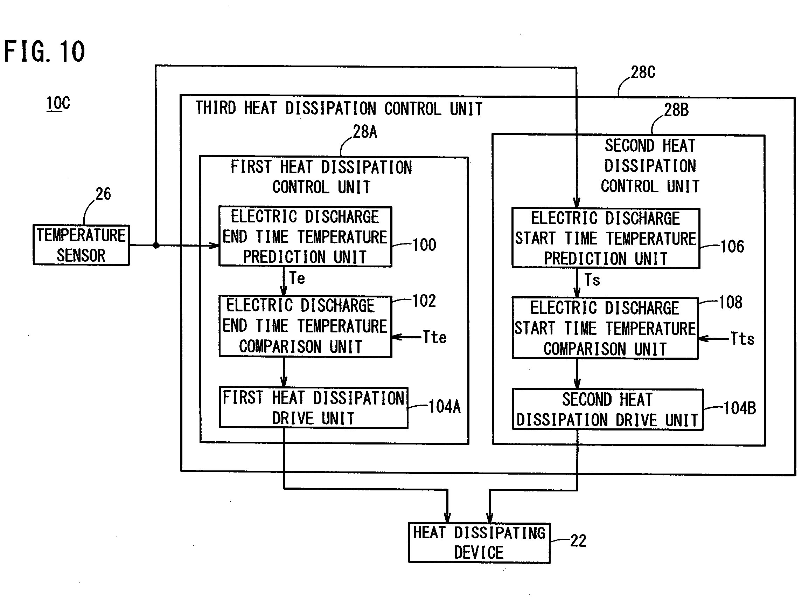

Next, a storage battery control device according to a third embodiment (hereinafter referred to as the third control device 10C) has a third heat dissipation control unit 28C as shown in FIG. 10. The third heat dissipation control unit 28C has the first heat dissipation control unit 28A and the second heat dissipation control unit 28B as described above. In the third control device 10C, both of the effects and advantages of the first control device 10A and the effects and advantages of the second control device 10B as described above are obtained. Further, it is possible to achieve reduction of power consumption during electric discharge and reduction of power consumption during the time period in which electric discharge of the storage battery is not performed.

Further, it is possible to bring the electric discharge end time temperature closer to the electric discharge end time target temperature Tte, and bring the next electric discharge start time temperature closer to the electric discharge start time target temperature Tts, it becomes possible to perform the operation of every charging/discharging cycle in the optimum operating range. For example, the third embodiment is preferably applicable to a system where the time interval from the start of the electric discharge operation to the start of the next electric discharge operation of the storage battery 12 is 24 hours, and the electric discharging operation is performed once, and the electric charging operation is performed once during the period of 24 hours. It is a matter of course that the third embodiment is optimally applicable to, e.g., short time operation where the electric discharging period is within 4 hours, and long-time operation where the electric discharging period is about 12 hours.

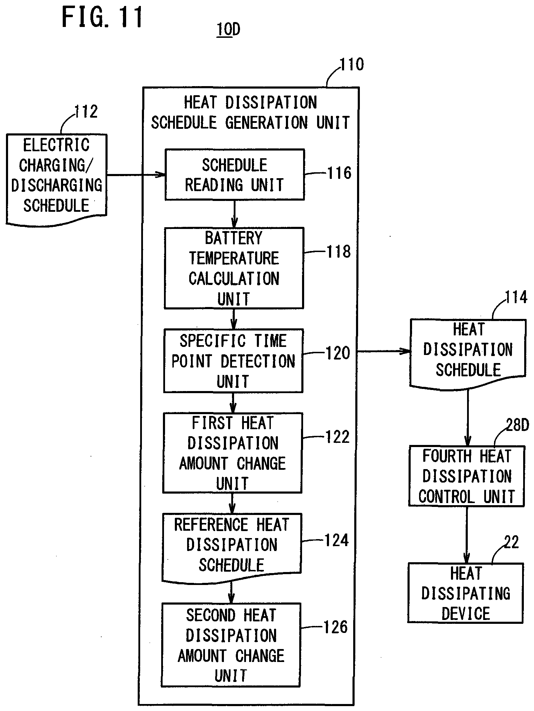

Next, as shown in FIG. 11, the storage battery control device according to a fourth embodiment (referred to as the fourth control device 10D) differs from the first control device 10A to the third control device 10C in that the fourth control device 10D has a heat dissipation schedule generation unit 110 and a fourth heat dissipation control unit 28D.

The heat dissipation schedule generation unit 110 generates a heat dissipation schedule 114 based on a predetermined electric charging/discharging schedule 112 to increase the heat dissipation amount prior to the time point at which the temperature of the storage battery 12 becomes high due to heat generated by electric charging/discharging of the storage battery 12. The fourth heat dissipation control unit 28D controls (drives or stops) the heat dissipating device 22 based on the generated heat dissipation schedule 114.

The electric charging/discharging schedule herein means a planned value of electric charging/discharging power at each of time points in the schedule period. Depending on the use purpose of the storage battery, the actual electric charging/ discharging power may match, or may not match the charging/discharging power of the electric charging/discharging schedule.

For example, in a case where the storage battery 12 is used for load leveling of electric power by performing electric charging of the storage battery 12 during the night time having an inexpensive electricity rate, and performing electric discharging of the storage battery 12 during the daytime having an expensive electricity rate, electric charging/discharging of the storage battery 12 is performed according to the predetermined electric charging/discharging schedule. Therefore, the actual electric charging/discharging power matches the electric charging/discharging power of the electric charging/discharging schedule.

For example, in a case where the storage battery 12 is used to level electric power of solar power generation, the electric charging/discharging schedule is determined according to a prediction value of the electric power (electrical energy) generated by the solar power generator. Since the actual electric charging/discharging power of the storage battery 12 is increased/decreased in correspondence with the actual electrical power generated by solar power, in most cases, the charging/discharging electrical power of the actual storage battery 12 has a value close to that of the electric charging/discharging schedule. However, the value of the charging/discharging electrical power may not always match the value of the electric charging/discharging schedule.

The heat dissipation schedule generation unit 110 includes a schedule reading unit 116, a battery temperature calculation unit 118, a specific time point detection unit 120, and a first heat dissipation amount change unit 122. The schedule reading unit 116 reads the predetermined electric charging/discharging schedule 112 from a memory. The battery temperature calculation unit 118 calculates the battery temperature of each of time points in a case where heat dissipation amount is minimized, based on the electric charging/discharging schedule 112. The specific time point detection unit 120 detects one or more time point where the calculated battery temperature exceeds the upper limit Tth of the allowable range (hereafter referred to as the specific time point) among the time points. The first heat dissipation amount change unit 122 changes the heat dissipation amount before the specific time point so as to become larger than the minimum heat dissipation amount, but not larger than the maximum heat dissipation amount, until the battery temperature at the detected specific time point becomes equal to or less than the upper limit of the allowable range.

By this first heat dissipation amount change unit 122, a reference heat dissipation schedule 124 is generated. The reference heat dissipation schedule 124 is a schedule which makes it possible to minimize the power consumption of the heat dissipating device 22, in maintaining the temperature in the casing 18 within a certain allowable range, during operation of the storage battery 12.

Further, the heat dissipation schedule generation unit 110 includes a second heat dissipation amount change unit 126. The second heat dissipation amount change unit 126, based on the reference heat dissipation schedule 124, sets the heat dissipation amount at each time point after changing, as a lower limit value of the heat dissipation amount, and sets a preset heat dissipation amount before each specific time point to be equal to or larger than the lower limit value of the heat dissipation amount. The second heat dissipation amount change unit 126 generates a final heat dissipation schedule 114.

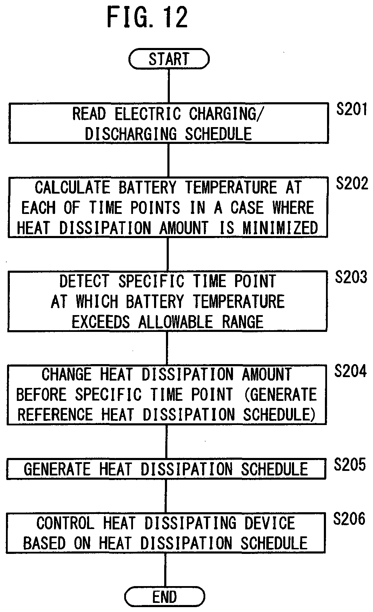

Next, processing operation of the fourth control device 10D will be described with reference to a flow chart in FIG. 12.

Firstly, in step S201, the schedule reading unit 116 reads the predetermined electric charging/discharging schedule 112, e.g., from the memory.

In step S202, the battery temperature calculation unit 118 determines the battery temperature of each of time points in a case where heat dissipation amount is minimized, based on the electric charging/discharging schedule 112. For minimizing the heat dissipation amount, the heat dissipation value (power conversion) is set to 0.5 kW, for example.

The battery temperature can be determined by the following computing equation (1):

$$\text{Battery Temperature } (t) = \text{Initial Temperature } +$$

$$\int_0^t (\textit{Heat generated by Energization} + \textit{Heat generated by Reaction} -$$

$$\textit{Heat Dissipation})dt \ / \text{ Heat Capacity } \dots (1)$$

For example, the lower limit of the allowable range (e.g., 305°C) is used as the initial temperature.

The battery temperature calculation unit 118 calculates the amount of the heat generated by energization and the amount of heat generated by reaction of each time point, from a planned value of the electric charging/discharging power at each of time points of the electric charging/discharging schedule 112, and integrates values obtained by subtracting the minimum heat dissipation amount from the sum of the amount of heat generated by energization and the amount of heat generated by reaction at each of the time points, from the beginning to the time t of the schedule period. This integration value is divided by the heat capacity (to obtain a temperature rise value from the beginning of the schedule period), and the resulting value is added to the initial temperature (a temperature at the beginning of the schedule period) to obtain the battery temperature at each time point.

For example, "each time point" herein means the time point when every predetermined time period elapses from the start time point. Examples of the predetermined time period include 1 minute, 10 minutes, 15 minutes, 20 minutes, 30 minutes, 45 minutes, one hour, etc. Further, in a case of leveling the electric power generated by utilizing the renewable energy, as the predetermined period, a short period of one minute, or less than 10 minutes is used.

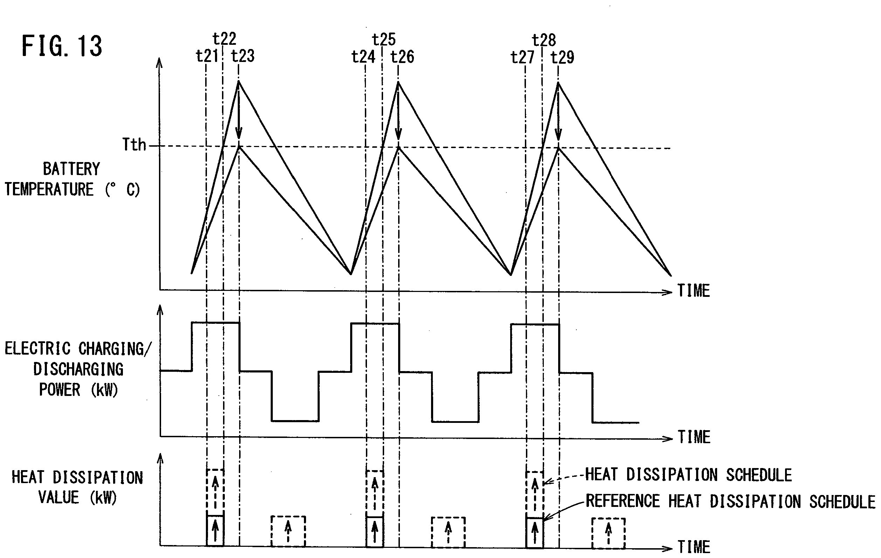

In step S203, the specific time point detection unit 120 detects one or more specific time point where the calculated battery temperature exceeds the upper limit Tth of the allowable range, among the time points. For example, in FIG. 13, t22, t25, and t28 are detected as the specific time points.

In step S204, the first heat dissipation amount change unit 122 changes the heat dissipation amount before each specific time point so as to become larger than the minimum heat dissipation amount, and not larger than the maximum heat dissipation amount, until the battery temperature at each of the time points becomes equal to or less than the upper limit of the allowable range.

This process is performed, e.g., as show in FIG. 13. For example, from the time points t21, t24, and t27, which are immediately before the respective specific time points t22, t25, and t28, to the corresponding specific time points t22, t25, and t28, it is assumed that heat is dissipated at an adjusted heat dissipation value which is not less than the minimum heat dissipation value, and not more than the maximum heat dissipation value, and in such an assumption, the battery temperature is calculated at each of time points t21 to t29. As in the case of the battery temperature calculation unit 118, the battery temperature is calculated using the above described computing equation (1). However, instead of the minimum heat dissipation amount in the case of the battery temperature calculation unit 118, an adjusted heat dissipation value is used as the heat dissipation amount. Preferably, the adjusted heat dissipation value is determined by gradually increasing the value from the minimum heat dissipation value. The adjusted heat dissipation value is changed until the calculated battery temperature at each time point becomes equal to or less than the upper limit of the allowable range. When the battery temperature at each time point becomes not more than the upper limit of the allowable range, each adjusted heat dissipation value at that time is stored as the reference heat dissipation schedule 124.

At this stage, the reference heat dissipation schedule 124 is generated in which the heat dissipation amount before each specific time point is set to the heat dissipation amount based on the corresponding adjusted heat dissipation value, and the heat dissipation amount before each of the time points excluding the specific time points among all of the time points is set to the minimum heat dissipation amount. As described above, the reference heat dissipation schedule 124 is a schedule which makes it possible to minimize the power consumption of the heat dissipating device 22, in regulating the temperature in the casing 18 such that the battery temperature is equal to or less than the upper limit of the allowable range, during operation of the storage battery 12.

In step S205, the second heat dissipation amount change unit 126 sets the heat dissipation amount at each time point of the reference heat dissipation schedule 124, as the lower limit value of the heat dissipation amount, and sets the preset heat dissipation amount at each time point to be equal to or greater than the lower limit value of the heat dissipation amount. By this process, the heat dissipation schedule 114 is generated.

Specifically, the second heat dissipation amount change unit 126 generates the heat dissipation schedule 114, e.g., based on the following conditions:

(a-1) The heat dissipation schedule 114 is generated in a manner that the battery temperature at the time of starting electric discharge becomes not less than the lower limit of the allowable range, and gets closer to the lower limit of the allowable range.

(a-2) The heat dissipation schedule 114 is generated based on the difference between the expected electric charging/discharging power of the electric charging/discharging schedule and the actual electric charging/discharging power. If the accuracy of the electric charging/discharging schedule is low, and the possibility that the amount of generated heat is increased is high, the heat dissipation amount is set to be greater in order to reduce the possibility that the battery temperature reaches the upper limit.

In step S206, the fourth heat dissipation control unit 28D controls (drives or stops) the heat dissipating device 22 based on the created heat dissipation schedule 114. It is a matter of course that the heat dissipating device 22 may be controlled based on the reference heat dissipation schedule 124 generated in step S204.

In this fourth control device 10D, the reference heat dissipation schedule 124 is generated which makes it possible to minimize the power consumption of the heat dissipating device 22, in maintaining the temperature in the casing 18 within a certain allowable range, during operation of the storage battery 12. Therefore, even if the heat dissipation schedule 114 is changed depending on the environment where the storage battery 12 is installed, and/or due to the demand or the like from the user, it is possible to reduce the power consumption of the heat dissipating device 22 close to the minimum. Further, while preventing the temperature in the casing 18 from exceeding the upper limit of the allowable range due to heat generated by reaction during electric discharge, it is possible to avoid excessive cooling of the inside of the casing 18. As a result, it becomes to reduce the power consumption at the time of operating the storage battery 12, and achieve improvement in the system efficiency.

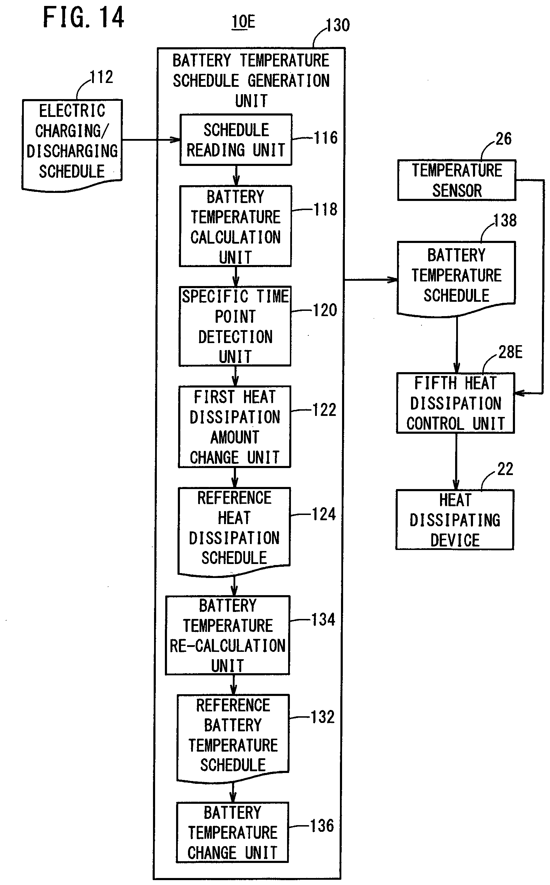

Next, as shown in FIG. 14, a storage battery control device according to a fifth embodiment of the present invention (hereinafter referred to as the fifth control device 10E) includes a battery temperature schedule generation unit 130 and a fifth heat dissipation control unit 28E.

In the same manner as the cases described above, the battery temperature schedule generation unit 130 generates, based on the predetermined electric charging/discharging schedule 112, a reference heat dissipation schedule 124 in which the heat dissipation amount is increased prior to the time point at which at least the amount of generated heat becomes large. Therefore, the battery temperature schedule generation unit 130 includes the schedule reading unit 116, the battery temperature calculation unit 118, the specific time point detection unit 120, and the first heat dissipation amount change unit 122 as described above.

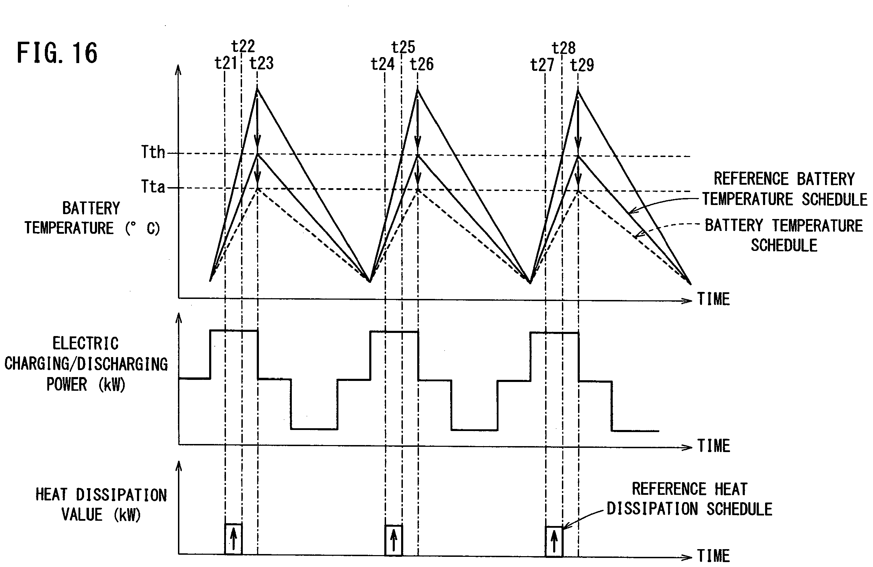

Further, the battery temperature schedule generation unit 130 includes a battery temperature re-calculation unit 134 and a battery temperature change unit 136. Based on the generated reference heat dissipation schedule 124, the battery temperature re-calculation unit 134 calculates the battery temperature at each time point based on the changed heat dissipation amount to thereby generate a reference battery temperature schedule 132. The battery temperature change unit 136 sets the target battery temperature Tta (see FIG. 16) at each of the time points to be not more than the re-calculated battery temperature at the corresponding time point. The battery temperature change unit 136 generates a final battery temperature schedule 138.

The fifth heat dissipation control unit 28E controls (drives or stops) the heat dissipating device 22 based on the generated battery temperature schedule 138 in a manner that the battery temperature at each time point gets closer to the target battery temperature Tta.

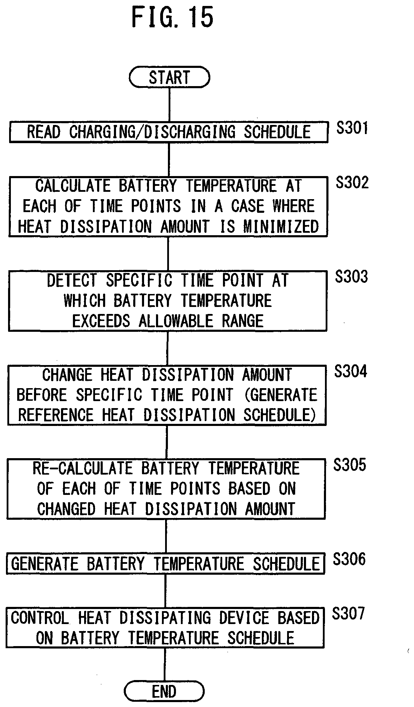

Next, processing operation of the fifth control device 10E will be described with reference to a flow chart in FIG. 15.

Firstly, in steps S301 to S304, in the same manner as steps S201 to S204 shown in FIG. 12 as described above, a reference heat dissipation schedule 124 is generated (see FIG. 16).

In step S305, the battery temperature re-calculation unit 134 re-calculates the battery temperature at each of time points based on the changed heat dissipation amount, based on the generated reference heat dissipation schedule 124. This calculation is performed based on the above computing equation (1). Thus, the reference battery temperature schedule 132 is generated. This reference battery temperature schedule 132 is a schedule which makes it possible to minimize the power consumption of the heat dissipating device 22, in maintaining the temperature in the casing 18 within a certain allowable range, during operation of the storage battery 12.

In step S306, the battery temperature change unit 136 generates a battery temperature schedule 138 in a manner that the target battery temperature Tta at each of time points is set to be not more than the battery temperature (re-calculated battery temperature) at the corresponding time point.

Specifically, the battery temperature change unit 136 generates a battery temperature schedule 138, e.g., in accordance with the following conditions:

(b-1) The battery temperature schedule 138 is generated in a manner that the battery temperature at the time of starting electric discharging becomes not less than the lower limit of the allowable arrange, and becomes closer to the lower limit of the allowable range.

(b-2) The battery temperature schedule 138 is generated in accordance with difference between the expected electric charging/discharging power of the electric charging/discharging schedule and the actual electric charging/discharging power. If the accuracy of the electric charging/discharging schedule is low, and it is likely that the amount of generated heat is high, the heat dissipation amount is set to be increased in order to reduce the possibility that the battery temperature reaches the upper limit.

In step S307, the fifth heat dissipation control unit 28E controls (drives or stops) the heat dissipating device 22 based on the generated battery temperature schedule 138, in a manner that the battery temperature at each time point, i.e., the battery temperature measured by the temperature sensor 26, gets closer to the target battery temperature Tta. This control may be performed according to the control method by the first heat dissipation control unit 28A of the first control device 10A and/or the control method by the second heat dissipation control unit 28B of the second control device 10B.

Also in the fifth control device 10E, the reference battery temperature schedule 132 is generated which makes it possible to minimize the power consumption of the heat dissipating device 22, in maintaining the temperature in the casing 18 within a certain allowable range, during operation of the storage battery 12. Therefore, thereafter, even if the battery temperature schedule 138 is changed depending on the environment where the storage battery 12 is installed, and/or due to the demand from the user, etc., it is possible to reduce the power consumption of the heat dissipating device 22 close to the minimum. Further, while preventing the temperature in the casing 18 from exceeding the upper limit Tth of the allowable range due to heat generated by reaction during electric discharge, it is possible to avoid excessive cooling of the inside of the casing 18. Consequently, power consumption at the time of operating the storage battery 12 is reduced, and improvement in the system efficiency is achieved.

In the fourth control device 10D and the fifth control device 10E, if the storage battery 12 is a storage battery where the amount of heat generated during electric discharging is larger than the amount of heat generated during electric charging, the fourth heat dissipation control unit 28D and the fifth heat dissipation control unit 28E may control the heat dissipating device 22 in a manner that the battery temperature at the time of starting electric discharge becomes not less than the lower limit of the allowable range, and gets closer to the lower limit of the allowable range, based on the electric charging/discharging schedule 112. In this case, the above described control method by the second heat dissipation control unit 28B of the second control device 10B may be adopted.

Further, as described above, the heat dissipation schedule 114 may be changed by the second heat dissipation amount change unit 126 and the battery temperature schedule 138 may be changed by the battery temperature change unit 136 in a manner that the battery temperature at the time of starting electric discharge becomes not less than the lower limit of the allowable range, and gets closer to the lower limit of the allowable range.

In this manner, by bringing the battery temperature at the time of starting electric discharge closer to the lower limit of the allowable range, in comparison with the case where the battery temperature becomes the lower limit of the allowable range before starting electric discharge, it is possible to reduce the electric power required for cooling before starting electric discharge and the electric power for maintaining the battery temperature. Further, since the battery temperature at the time of starting electric discharge is the lower limit of the allowable range, it is possible to reduce the possibility that the battery temperature reaches the upper limit of the allowable range.

Further, in the fourth control device 10D and the fifth control device 10E, most preferably, the actual electric charging/discharging electric power matches the electric charging/discharging electric power of the electric charging/discharging schedule 112, because the actual battery temperature becomes closer to the target battery temperature Tta. Preferably, the actual electric charging/discharging electric power is close to, even if it does not match, the electric charging/discharging electric power of the electric charging/discharging schedule 112, since the actual battery temperature becomes closer to the target battery temperature Tta.

In particular, in the fifth control device 10E, when a large difference is present between the actual electric charging/discharging power and the electric charging/discharging power of the electric charging/discharging schedule 112 in some of time points, or when a relatively small difference is present between the actual electric charging/discharging power and the electric charging/discharging power of the electric charging/discharging schedule 112 in most of time points, even if the actual amount of heat generated by energization and actual amount of heat generated by reaction are different from the calculated values of the amount of heat generated by energization and the amount of heat generated by reaction at the time of creating the battery temperature schedule 138, since the cooling device is controlled such that the actual battery temperature gets closer to the target battery temperature Tta, it is possible to reduce the possibility that the battery is cooled excessively and that the battery temperature reaches the upper limit of the allowable range.

The storage battery control device is not limited to the above described embodiments. It is a matter of course that various structures can be adopted without deviating from the scope of the present invention. For example, though both of the box body and the lid body have vacuum heat insulating structure in the above examples, both of the box body and the lid body may have atmospheric heat insulating structure. It is a matter of course that the lid body may have atmospheric heat insulating structure and the box body may have vacuum heat insulating structure, or the lid body may have vacuum heat insulating structure and the box body may have atmospheric heat insulating structure.

## Claims

1. A system comprising a storage battery control device (10A) for controlling a storage battery (12), and a storage battery (12) comprising:

   a casing (18) containing a battery assembly (16) made up of a plurality of battery cells (14); and
   at least a heat dissipating device (22) configured to maintain a temperature in the casing (18) within a certain temperature range,
   wherein the storage battery control device (10A) comprises a heat dissipation control unit (28) configured to control the heat dissipating device (22); and
   if a predicted temperature of the storage battery (12) at an upcoming time point is higher than a predetermined temperature, the heat dissipation control unit (28) controls the heat dissipating device (22) prior to the time point to increase heat dissipation amount,

wherein the storage battery control device (10A) comprises a schedule generation unit (110) configured to generate a schedule based on a predetermined electric charging/discharging schedule (112) in a manner to increase heat dissipation amount prior to a time point at which the temperature of the storage battery (12) becomes high, due to heat generated by electric charging/discharging of the storage battery (12); and the heat dissipation control unit (28) controls the heat dissipating device (22) based on the generated schedule, and

wherein the schedule generation unit (110) calculates a battery temperature at each of time points in a case where heat dissipation amount is minimized, based on the electric charging/discharging schedule (112); if the calculated battery temperature exceeds an upper limit of an allowable range at one or more specific time point among the time points, the schedule generation unit (110) changes heat dissipation amount before the specific time point to have a value more than a minimum heat dissipation amount and not more than a maximum heat dissipation amount, until the battery temperature at the specific time point becomes not more than the upper limit of the allowable range;

the schedule generation unit (110) sets heat dissipation amount at the specific time point after the changing, as a lower limit value of the heat dissipation amount;

the schedule generation unit (110) generates a heat dissipation schedule (114) where the set heat dissipation amount before the specific time point is not less than the lower limit value of the heat dissipation amount; and the heat dissipation control unit (28) controls the heat dissipating device (22) based on the generated heat dissipation schedule (114).

2. The system according to claim 1,

wherein the heat dissipation control unit (28) predicts a temperature at time of finishing electric discharge of the storage battery (12) every unit time, during electric discharge of the storage battery (12); and if the predicted temperature at the time of finishing electric discharge of the storage battery (12) is higher than a predetermined target temperature at the time of finishing electric discharge of the storage battery (12), the heat dissipation control unit (28) drives the heat dissipating device (22).

3. The system according to claim 1,

wherein the heat dissipation control unit (28) predicts a temperature at end of electric discharge of the storage battery (12) in a case of continuing electric discharge at electric discharge power of that time, every unit time, during electric discharge of the storage battery (12); and if the predicted temperature at the end of electric discharge is higher than a predetermined target temperature at the end of electric discharge, the heat dissipation control unit (28) drives the heat dissipating device (22).

4. The system according to any one of claims 1 to 3, wherein the heat dissipation control unit predicts a temperature at time of starting the next electric discharge every unit time during a time period in which electric discharge of the storage battery (12) is not performed; and if the predicted temperature is higher than a predetermined target temperature, the heat dissipation control unit drives the heat dissipating device (22).

5. The system according to claim 1,

wherein the storage battery (12) is a storage battery where amount of heat generated at time of electric discharging is larger than amount of heat generated at time of electric charging; and the heat dissipation control unit (28) controls the heat dissipating device (22) based on the electric charging/discharging schedule (112) in a manner that the battery temperature at time of starting electric discharging becomes not less than a lower limit of the allowable range, and closer to the lower limit of the allowable range.

**Patentansprüche**

1. System, aufweisend eine Speicherbatteriesteuervorrichtung (10A) zum Steuern einer Speicherbatterie (12), und eine Speicherbatterie (12) aufweisend:

ein Gehäuse (18), das eine Batterieanordnung (16) enthält, die aus mehreren Batteriezellen (14) gebildet ist; und zumindest eine Wärmeableitvorrichtung (22), die dazu konfiguriert ist, eine Temperatur in dem Gehäuse (18) in einem bestimmten Temperaturbereich zu halten,

wobei die Speicherbatteriesteuervorrichtung (10A) eine Wärmeableitsteuereinheit (28) aufweist, die dazu konfiguriert ist, die Wärmeableitvorrichtung (22) zu steuern; und

falls eine vorhergesagte Temperatur der Speicherbatterie (12) zu einem bevorstehenden Zeitpunkt höher ist als eine vorgegebene Temperatur, die Wärmeableitsteuereinheit (28) die Wärmeableitvorrichtung (22) vor dem Zeitpunkt steuert, um die Wärmeableitmenge zu erhöhen,

wobei die Speicherbatteriesteuervorrichtung (10A) eine Zeitplanerzeugungseinheit (110) aufweist, die dazu konfiguriert ist, einen Zeitplan auf der Grundlage eines vorgegebenen elektrischen Lade-/Entladezeitplans (112) auf eine Weise zu erzeugen, um die Wärmeableitmenge vor einem Zeitpunkt zu erhöhen, zu dem sich die Temperatur der Speicherbatterie (12) aufgrund von durch elektrisches Laden/Entladen der Speicherbatterie (12) erzeugter Wärme erhöht; und

die Wärmeableitsteuereinheit (28) die Wärmeableitvorrichtung (22) auf der Grundlage des erzeugten Zeitplans steuert, und

wobei die Zeitplanerzeugungseinheit (110) eine Batterietemperatur zu jedem Zeitpunkt in einem Fall, in dem die Wärmeableitmenge verringert ist, auf der Grundlage des elektrischen Lade-/Entladezeitplans (112) berechnet;

falls die berechnete Batterietemperatur eine obere Grenze eines zulässigen Bereichs zu einem oder mehreren bestimmten Zeitpunkten unter den Zeitpunkten überschreitet, die Zeitplanerzeugungseinheit (110) die Wärmeableitmenge vor dem bestimmten Zeitpunkt auf einen Wert ändert, der über einer minimalen Wärmeableitmenge und nicht über einer maximalen Wärmeableitmenge liegt, bis sich die Batterietemperatur zu dem bestimmten Zeitpunkt nicht über die obere Grenze des zulässigen Bereichs erhöht;

die Zeitplanerzeugungseinheit (110) die Wärmeableitmenge zu dem bestimmten Zeitpunkt nach dem Ändern als einen unteren Grenzwert der Wärmeableitmenge festlegt;

die Zeitplanerzeugungseinheit (110) einen Wärmeableitzeitplan (114) erzeugt, bei dem die festgelegte Wärmeableitmenge vor dem bestimmten Zeitpunkt nicht unter dem unteren Grenzwert der Wärmeableitmenge liegt; und

die Wärmeableitsteuereinheit (28) die Wärmeableitvorrichtung (22) auf der Grundlage des erzeugten Wärmeableitzeitplans (114) steuert.

2. System nach Anspruch 1,

wobei die Wärmeableitsteuereinheit (28) eine Temperatur zu einem Zeitpunkt des Beendens der elektrischen Entladung der Speicherbatterie (12) zu jeder Zeiteinheit während der elektrischen Entladung der Speicherbatterie (12) vorhersagt; und

falls die vorhergesagte Temperatur zu dem Zeitpunkt des Beendens der elektrischen Entladung der Speicherbatterie (12) höher ist als eine vorgegebene Zieltemperatur zum Zeitpunkt des Beendens der elektrischen Entladung der Speicherbatterie (12), die Wärmeableitsteuereinheit (28) die Wärmeableitvorrichtung (22) ansteuert.

3. System nach Anspruch 1,

wobei die Wärmeableitsteuereinheit (28) eine Temperatur am Ende der elektrischen Entladung der Speicherbatterie (12) in einem Fall einer fortlaufenden elektrischen Entladung bei einer elektrischen Entladeleistung zu diesem Zeitpunkt zu jeder Zeiteinheit während des elektrischen Entladens der Speicherbatterie (12) vorhersagt; und

falls die vorhergesagte Temperatur am Ende der elektrischen Entladung höher ist als eine vorgegebene Zieltemperatur am Ende der elektrischen Entladung, die Wärmeableitsteuereinheit (28) die Wärmeableitvorrichtung (22) ansteuert.

4. System nach einem der Ansprüche 1 bis 3,

wobei die Wärmeableitsteuereinheit zu einem Zeitpunkt des Beginns der nächsten elektrischen Entladung zu jeder Zeiteinheit während einer Zeitdauer, in der keine elektrische Entladung der Speicherbatterie (12) durchgeführt wird, eine Temperatur vorhersagt; und,

falls die vorhergesagte Temperatur höher ist als eine vorgegebene Zieltemperatur, die Wärmeableitsteuereinheit die Wärmeableitvorrichtung (22) ansteuert.

16

**5.** System nach Anspruch 1,

wobei die Speicherbatterie (12) eine Speicherbatterie ist, bei der die Menge an Wärme, die zum Zeitpunkt der elektrischen Entladung erzeugt wird, größer ist als eine Menge an Wärme, die zum Zeitpunkt der elektrischen Ladung erzeugt wird; und
die Wärmeableitsteuereinheit (28) die Wärmeableitvorrichtung (22) auf der Grundlage des elektrischen Lade-/Entladezeitplans (112) auf eine Weise steuert, dass die Batterietemperatur zum Zeitpunkt des Beginns des elektrischen Entladens nicht niedriger wird als eine untere Grenze des zulässigen Bereichs und sich der unteren Grenze des zulässigen Bereichs annähert.


**Revendications**

**1.** Système comprenant un dispositif (10A) de commande de batterie de stockage pour commander une batterie de stockage (12), et une batterie de stockage (12) comprenant :

un boîtier (18) contenant un ensemble batterie (16) constitué d'une pluralité d'éléments (14) de batterie ; et
au moins un dispositif de dissipation de la chaleur (22) conçu pour maintenir une température dans le boîtier (18) dans une certaine plage de températures,
le dispositif (10A) de commande de batterie de stockage comprenant une unité (28) de commande de dissipation de la chaleur conçue pour commander le dispositif de dissipation de la chaleur (22) ; et
si une température prédite de la batterie de stockage (12) à un point de temps à venir est supérieure à une température prédéfinie, l'unité (28) de commande de dissipation de la chaleur amène le dispositif de dissipation de la chaleur (22), avant le point de temps, à augmenter la quantité de dissipation de la chaleur,
le dispositif (10A) de commande de batterie de stockage comprenant une unité (110) de création de programme conçue pour créer un programme en fonction d'un programme (112) de charge/décharge électrique prédéfini, de manière à augmenter la quantité de dissipation de la chaleur avant un point de temps auquel la température de la batterie de stockage (12) devient élevée, en raison de la chaleur produite par la charge/décharge électrique de la batterie de stockage (12) ; et
l'unité (28) de commande de dissipation de la chaleur commande le dispositif de dissipation de la chaleur (22) en fonction du programme créé, et
l'unité (110) de création de programme calculant une température de la batterie à chaque point de temps lorsqu'une quantité de dissipation de la chaleur est réduite à un minimum, en fonction du programme (112) de charge/décharge électrique ;
si la température calculée de la batterie dépasse une limite supérieure d'une plage permissible à au moins un point de temps spécifique parmi les points de temps, l'unité (110) de création de programme change la quantité de dissipation de la chaleur avant le point de temps spécifique, afin d'avoir une valeur supérieure à une quantité minimale de dissipation de la chaleur et inférieure ou égale à une quantité maximale de dissipation de la chaleur, jusqu'à ce que la température de la batterie au point de temps spécifique devienne égale ou inférieure à la limite supérieure de la plage permissible ;
l'unité (110) de création de programme règle la quantité de dissipation de la chaleur au point de temps spécifique après le changement, en tant que valeur limite inférieure de la quantité de dissipation de la chaleur ;
l'unité (110) de création de programme crée un programme (114) de dissipation de la chaleur dans lequel la quantité réglée de dissipation de la chaleur, avant le points de temps spécifique, est égale ou supérieure à la valeur limite inférieure de la quantité de dissipation de la chaleur ; et
l'unité (28) de commande de dissipation de la chaleur commande le dispositif de dissipation de la chaleur (22) en fonction du programme créé (114) de dissipation de la chaleur.

**2.** Le système selon la revendication 1,

dans lequel l'unité (28) de commande de dissipation de la chaleur prédit une température au moment de l'achèvement de la décharge électrique de la batterie de stockage (12) à chaque unité de temps, pendant la décharge électrique de la batterie de stockage (12) ; et
si la température prédite au moment de l'achèvement de la décharge électrique de la batterie de stockage (12) est supérieure à une température cible prédéfinie au moment de l'achèvement de la décharge électrique de la batterie de stockage (12), l'unité (28) de commande de dissipation de la chaleur entraîne le dispositif de dissipation de la chaleur (22).

**3.** Le système selon la revendication 1,

dans lequel l'unité (28) de commande de dissipation de la chaleur prédit une température à la fin de la décharge électrique de la batterie de stockage (12) dans le cas d'une continuation de la décharge électrique à la puissance de décharge électrique de ce moment, à chaque unité de temps, pendant la décharge électrique de la batterie de stockage (12) ; et
si la température prédite à la fin de la décharge électrique est supérieure à une température cible prédéfinie à la fin de la décharge électrique, l'unité (28) de commande de dissipation de la chaleur entraîne le dispositif de dissipation de la chaleur (22).

**4.** Le système selon l'une quelconque des revendications 1 à 3,

dans lequel l'unité de commande de dissipation de la chaleur prédit une température au moment du démarrage de la décharge électrique suivante à chaque unité de temps pendant une période dans laquelle la décharge électrique de la batterie de stockage (12) n'est pas effectuée ; et
si la température prédite est supérieure à une température cible prédéfinie, l'unité de commande de dissipation de la chaleur entraîne le dispositif de dissipation de la chaleur (22).

**5.** Le système selon la revendication 1,

dans lequel la batterie de stockage (12) est une batterie de stockage dans laquelle une quantité de chaleur produite au moment d'une décharge électrique est supérieure à une quantité de chaleur produite au moment d'une charge électrique ; et
l'unité (28) de commande de dissipation de la chaleur commande le dispositif de dissipation de la chaleur (22) en fonction du programme (112) de charge/décharge électrique, de sorte que la température de la batterie au moment du démarrage de la décharge électrique devienne égale ou supérieure à une limite inférieure de la plage permissible, et plus proche de la limite inférieure de la plage permissible.

# FIG. 1

EP 3 264 517 B1

FIG. 2

FIG. 3

# FIG. 4

FIG. 5

START

START OPERATION OF ELECTRIC DISCHARGE
END TIME TEMPERATURE PREDICTION UNIT — S1

ELAPSE OF UNIT TIME? — S2 — NO

YES

PREDICT ELECTRIC DISCHARGE
END TIME TEMPERATURE — S3

COMPARE ELECTRIC DISCHARGE END TIME
PREDICTION TEMPERATURE Te WITH
ELECTRIC DISCHARGE END
TIME TARGET TEMPERATURE Tte — S4

(Te>Tte) — COMPARISON RESULT — (Te≦Tte)

DRIVE HEAT DISSIPATING
DEVICE (ON) — S5

STOP HEAT DISSIPATING
DEVICE (OFF) — S6

NO — END REQUEST? — S7

YES

END

EP 3 264 517 B1

# FIG. 6

ts  t1  t2  tj-1  tj  te

Ta

ELECTRIC DISCHARGE
END TIME PREDICTION
TEMPERATURE (° C)

Te1
Te2
Tte
Tej

TIME

ELECTRIC
CHARGING/DISCHARGING
POWER (kW)

(ELECTRIC DISCHARGE)

TIME

HEAT DISSIPATING
DEVICE

| OFF | OFF | ON | ON | ON | ON | OFF | OFF |

TIME

EP 3 264 517 B1

# FIG. 7

<u>10B</u>

28B

SECOND HEAT DISSIPATION
CONTROL UNIT

26

TEMPERATURE
SENSOR

ELECTRIC DISCHARGE
START TIME TEMPERATURE
PREDICTION UNIT — 106

Ts

ELECTRIC DISCHARGE — 108
START TIME TEMPERATURE        ← Tts
COMPARISON UNIT

SECOND HEAT
DISSIPATION DRIVE UNIT — 104B

HEAT DISSIPATING
DEVICE — 22

FIG. 8

```
                    ( START )
                        │
                        ▼
        ┌───────────────────────────────┐ S101
        │  START OPERATION OF ELECTRIC  │
        │     DISCHARGE START TIME      │
        │  TEMPERATURE PREDICTION UNIT  │
        └───────────────────────────────┘
                        │
                        ▼
        ┌───────────────────────────────┐ S102
        │     STORE ELECTRIC DISCHARGE  │
        │      END TIME TEMPERATURE AS  │
        │  PREVIOUS CURRENT TEMPERATURE │
        └───────────────────────────────┘
                        │
                        ▼
        ◁─────────────────────────────────▷ S103  NO
        ◁      ELAPSE OF UNIT TIME?        ▷──────
                        │
                       YES
                        ▼
        ┌───────────────────────────────┐ S104
        │        STORE PRESENT          │
        │      CURRENT TEMPERATURE      │
        └───────────────────────────────┘
                        │
                        ▼
        ┌───────────────────────────────┐ S105
        │   PREDICT ELECTRIC DISCHARGE  │
        │      START TIME TEMPERATURE   │
        └───────────────────────────────┘
                        │
                        ▼
        ┌───────────────────────────────┐ S106
        │  COMPARE ELECTRIC DISCHARGE   │
        │    START TIME PREDICTION      │
        │ TEMPERATURE Ts WITH ELECTRIC  │
        │  DISCHARGE START TIME TARGET   │
        │       TEMPERATURE Tts          │
        └───────────────────────────────┘
                        │
  (Ts>Tts)  ◁───────────────────────────▷  (Ts≦Tts)
  ┌─────────◁    COMPARISON RESULT    ▷─────────┐
  │              S107                          │ S108
┌──────────────────┐              ┌──────────────────────┐
│    DRIVE HEAT    │              │      STOP HEAT       │
│DISSIPATING DEVICE│              │  DISSIPATING DEVICE  │
│      (ON)        │              │        (OFF)         │
└──────────────────┘              └──────────────────────┘
  │                                           │
  └───────────────────┬───────────────────────┘
                      ▼
        ┌───────────────────────────────┐ S109
        │    STORE, STORED CURRENT      │
        │    TEMPERATURE AS PREVIOUS    │
        │      CURRENT TEMPERATURE      │
        └───────────────────────────────┘
                      │
        NO            ▼
      ◁───────────────────────────────────▷ S110
      ◁         END REQUEST?              ▷
                      │
                     YES
                      ▼
                  ( END )
```

FIG. 9

ELECTRIC DISCHARGE START TIME PREDICTION TEMPERATURE (° C)

te · t11 · t12 · tk · tss · t13 · Ta

Ts11
Ts12
Ts13
Tts
Tsk
→ TIME

(ELECTRIC DISCHARGING)

ELECTRIC CHARGING/DISCHARGING POWER (kW)

(ELECTRIC CHARGING)

→ TIME

HEAT DISSIPATING DEVICE

| OFF | OFF | ON | ON | ON | OFF | OFF | OFF | ON | ON | ON | OFF |

→ TIME

# FIG. 10

# FIG. 11

10D

110
HEAT DISSIPATION
SCHEDULE GENERATION UNIT

112
ELECTRIC
CHARGING/
DISCHARGING
SCHEDULE

SCHEDULE
READING UNIT —116

BATTERY
TEMPERATURE
CALCULATION
UNIT —118

SPECIFIC TIME
POINT DETECTION —120
UNIT

FIRST HEAT
DISSIPATION
AMOUNT CHANGE —122
UNIT

REFERENCE HEAT
DISSIPATION —124
SCHEDULE

SECOND HEAT
DISSIPATION
AMOUNT CHANGE —126
UNIT

114
HEAT
DISSIPATION
SCHEDULE

28D
FOURTH HEAT
DISSIPATION
CONTROL UNIT

22
HEAT
DISSIPATING
DEVICE

# FIG. 12

START

READ ELECTRIC CHARGING/
DISCHARGING SCHEDULE — S201

CALCULATE BATTERY TEMPERATURE AT
EACH OF TIME POINTS IN A CASE WHERE
HEAT DISSIPATION AMOUNT IS MINIMIZED — S202

DETECT SPECIFIC TIME POINT
AT WHICH BATTERY TEMPERATURE
EXCEEDS ALLOWABLE RANGE — S203

CHANGE HEAT DISSIPATION AMOUNT
BEFORE SPECIFIC TIME POINT (GENERATE
REFERENCE HEAT DISSIPATION SCHEDULE) — S204

GENERATE HEAT DISSIPATION SCHEDULE — S205

CONTROL HEAT DISSIPATING DEVICE
BASED ON HEAT DISSIPATION SCHEDULE — S206

END

# FIG. 13

BATTERY TEMPERATURE (° C)

ELECTRIC CHARGING/ DISCHARGING POWER (kW)

HEAT DISSIPATION VALUE (kW)

Tth

t21 t22 t23 · t24 t25 t26 · t27 t28 t29

TIME

TIME

HEAT DISSIPATION SCHEDULE

REFERENCE HEAT DISSIPATION SCHEDULE

TIME

EP 3 264 517 B1

# FIG. 14

10E

130

BATTERY TEMPERATURE
SCHEDULE GENERATION
UNIT

112

ELECTRIC
CHARGING/
DISCHARGING
SCHEDULE

SCHEDULE
READING UNIT — 116

BATTERY
TEMPERATURE
CALCULATION
UNIT — 118

SPECIFIC TIME
POINT
DETECTION
UNIT — 120

FIRST HEAT
DISSIPATION
AMOUNT
CHANGE UNIT — 122

REFERENCE
HEAT
DISSIPATION
SCHEDULE — 124

BATTERY
TEMPERATURE
RE-CALCULATION
UNIT — 134

REFERENCE
BATTERY
TEMPERATURE
SCHEDULE — 132

BATTERY
TEMPERATURE
CHANGE UNIT — 136

26

TEMPERATURE
SENSOR

138

BATTERY
TEMPERATURE
SCHEDULE

28E

FIFTH HEAT
DISSIPATION
CONTROL UNIT

22

HEAT
DISSIPATING
DEVICE

32

# FIG. 15

```
                    ( START )
                        |
        ┌───────────────────────────────────┐
        │ READ CHARGING/DISCHARGING SCHEDULE │  S301
        └───────────────────────────────────┘
                        |
        ┌───────────────────────────────────┐
        │   CALCULATE BATTERY TEMPERATURE AT │  S302
        │  EACH OF TIME POINTS IN A CASE WHERE │
        │ HEAT DISSIPATION AMOUNT IS MINIMIZED │
        └───────────────────────────────────┘
                        |
        ┌───────────────────────────────────┐
        │   DETECT SPECIFIC TIME POINT AT    │  S303
        │     WHICH BATTERY TEMPERATURE      │
        │      EXCEEDS ALLOWABLE RANGE       │
        └───────────────────────────────────┘
                        |
        ┌───────────────────────────────────┐
        │   CHANGE HEAT DISSIPATION AMOUNT   │  S304
        │ BEFORE SPECIFIC TIME POINT (GENERATE │
        │ REFERENCE HEAT DISSIPATION SCHEDULE) │
        └───────────────────────────────────┘
                        |
        ┌───────────────────────────────────┐
        │  RE-CALCULATE BATTERY TEMPERATURE  │  S305
        │    OF EACH OF TIME POINTS BASED ON │
        │   CHANGED HEAT DISSIPATION AMOUNT  │
        └───────────────────────────────────┘
                        |
        ┌───────────────────────────────────┐
        │ GENERATE BATTERY TEMPERATURE SCHEDULE │  S306
        └───────────────────────────────────┘
                        |
        ┌───────────────────────────────────┐
        │ CONTROL HEAT DISSIPATING DEVICE BASED │  S307
        │   ON BATTERY TEMPERATURE SCHEDULE  │
        └───────────────────────────────────┘
                        |
                    (  END  )
```

**FIG. 16**

EP 3 264 517 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013111426 A
- EP 2808934 A1
- JP H09199167 A
- JP 20060139963 A
- JP H0773907 A